# EUROPÄISCHE PATENTSCHRIFT

(11) **EP 0 887 537 B1**
(45) Veröffentlichungstag und Bekanntmachung des Hinweises auf die Patenterteilung: **20.11.2002**
(21) Anmeldenummer: 98110862.4
(22) Anmeldetag: 13.06.1998
(51) Int. Cl.: F02F 11/00, F02F 7/00, F16J 15/06

(54) **Dichtungsanordnung zwischen ruhend aufeinanderliegenden Bauteilen**
Sealing arrangement between stationary construction components
Agencement d' étanchéité pour des éléments de construction stationnaires

(30) Priorität: 25.06.1997 DE 19726995
(43) Veröffentlichungstag der Anmeldung: 30.12.1998
(73) Patentinhaber: Ford Global Technologies, Inc., A subsidiary of Ford Motor Company, Dearborn, Michigan 48126 (US)
(72) Erfinder: Noeres, Bruno, 51375 Leverkusen (DE); Seifert, Klaus, 50935 Koeln (DE); Kuhlen, Morten, 41199 Moenchengladbach (DE)
(74) Vertreter: Drömer, Hans-Carsten, Dipl.-Ing.

(56) Entgegenhaltungen:
- DE-A- 2 052 474
- DE-A- 3 519 205
- US-A- 2 657 825
- US-A- 3 266 102
- US-A- 5 209 845

## Beschreibung

Die Erfindung bezieht sich auf eine Dichtungsanordnung zwischen ruhend aufeinanderliegenden Bauteilen, mit einer in einer endlosen Aufnahmenut im einen Bauteil lose aufgenommenen, streifenförmigen endlosen Ringdichtung mit einem gleichförmigen Querschnitt.

Aus der DE-OS 35 19 205 ist eine Dichtungsanordnung zwischen ruhend aufeinanderliegenden Bauteilen der im Oberbegriff des Patentanspruchs 1 erläuterten Art bekannt.

Bei dieser bekannten Dichtungsanordnung weist die endlose Ringdichtung einen gleichförmigen Querschnitt von Ellipsenform auf, wodurch die Ringdichtung nur als ein entsprechend aufwendiges Formteil aus dem entsprechenden wärmefesten, elastischen Material hergestellt werden muß.

Von einer Anwendung bei Kühlmittelauslaßstutzen an Brennkraftmaschinen ist auch bereits eine Dichtungsanordnung bekannt, bei der eine in einer endlosen Aufnahmenut im einen Bauteil lose aufgenommene, streifenförmige, endlose Ringdichtung einen gleichförmigen, rechteckigen Querschnitt aufweist und dementsprechend in einfacher Weise durch Abschneiden von einem entsprechend extrudierten Schlauch des wärmefesten, elastischen Materials hergestellt werden kann.

Diese bekannte endlose Ringdichtung mit rechteckigem Querschnitt ist in einer endlosen Aufnahmenut von einem entsprechenden Querschnitt und einer Kreisform angeordnet, wobei das Volumen der Dichtung das Volumen der Nut zunächst nicht ausfüllen darf. Dadurch ist die Dichtung im unverpreßten Zustand schmäler als die Aufnahmenut und kann aus der Nut leicht herausfallen. Die Dichtung darf im unverpreßten Zustand auch nicht eng an der Wandung der Nut anliegen, da sonst ein leichtes Einsetzen erschwert wird.

Die Aufgabe der Erfindung ist es eine Dichtungsanordnung zwischen ruhend aufeinanderliegenden Bauteilen zu schaffen, die auch bei im Bau von Brennkraftmaschinen oftmals erforderlichen, komplizierten Verlauf der Kontour der endlosen Ringdichtung in unterschiedlichen und gegensätzlichen Windungen eine einfache und billige Herstellung der Ringdichtung und eine einfache Montage und zuverlässiges Festhalten während der Montage der Bauteile gewährleistet.

Gemäß der Erfindung wird diese Aufgabe gelöst, indem eine Dichtungsanordnung zwischen ruhend aufeinanderliegenden Bauteilen, der im Oberbegriff des Patentanspruchs 1 erläuterten Art, die im Kennzeichenteil des Patentanspruchs 1 aufgezeigten Merkmale aufweist.

In den weiteren Ansprüchen sind zweckmäßige Ausgestaltungen der Erfindung erläutert.

Dadurch, daß die in einem Bauteil angeordnete endlose Aufnahmenut einen rechteckigen Querschnitt von größerer Breite als die Dicke der Ringdichtung aufweist und in der Aufnahmenut in bestimmten Abständen von einer Seitenwand her ausgehende, die endlose Ringdichtung festhaltende Haltestege vorgesehen sind, kann eine durch Abschneiden eines extrudierten Schlauches in einfacher Weise mit gleichförmigen, rechteckigen Querschnitt hergestellte endlose Ringdichtung auch entlang einer komplizierten, unterschiedliche Krümmungen aufweisenden Verlauf der Kontour einer endlosen Aufnahmenut eingesetzt werden, ohne daß die Gefahr besteht, daß die Ringdichtung während der nachfolgenden Montage der Bauteile in unerwünschter Weise herausfällt.

Die Erfindung wird anhand eines in den beiliegenden Zeichnungen gezeigten Ausführungsbeispieles näher erläutert. Es zeigt:
- Fig.1.: eine Draufsicht auf eine endlose Aufnahmenut in einen Bauteil;
- Fig.2.: eine Draufsicht auf die endlose Ringdichtung;

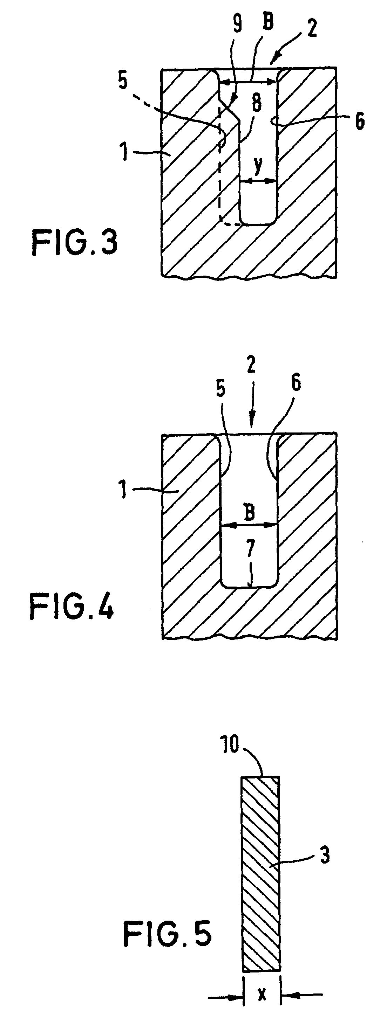

- Fig.3.: einen vertikalen Schnitt entlang der Linie III-III in Fig. 1 durch den Bereich eines Haltesteges;
- Fig.4.: einen Schnitt entlang der Linie IV-IV in Fig.1 durch den Bereich der Aufnahmenut ohne Haltesteg und
- Fig.5.: einen vertikalen Schnitt entlang der Linie V-V in Fig. II durch die endlose Ringdichtung.

In einem Bauteil 1, im vorliegenden Fall in einem aus Kunststoffmaterial gefertigten Ansaugkrümmer, ist eine endlose Aufnahmenut 2 für eine endlose Ringdichtung 3 angeordnet. Der Verlauf der Kontour der endlosen Aufnahmenut folgt hierbei dem Innenumfang 4 eines Einlaßkanales im Ansaugkrümmer, der eine komplizierte Form aufweist um z.B. die Anordnung von Abgasrückführkanälen zu ermöglichen.

Bei einem von der Anmelderin bereits angewendeten Ansaugkrümmer dieser Bauform wies die endlose Aufnahmenut einen gleichförmigen Querschnitt auf und die in diese Aufnahmenut eingesetzte endlose Ringdichtung 3 wurde als ein Formteil hergestellt, dessen Kontour der Kontour des Verlaufs der Aufnahmenut entsprach und wobei an den Seitenwänden der Ringdichtung in bestimmten Abständen Haltestege angeformt waren, um die Ringdichtung in der Aufnahmenut zu halten, so daß beim Aufsetzen des Ansaugkrümmers auf den Zylinderkopf der Brennkraftmaschine ein Herausfallen der Ringdichtung vermieden wurde.

Die Herstellung dieser Dichtung als Formteil war teuer und materialaufwendig.

Gemäß der Erfindung ist nunmehr die endlose Aufnahmenut 2 mit einem rechteckigen Querschnitt mit Seitenwänden 5 und 6 und einer Basis 7 ausgebildet und in bestimmten Abständen gehen von einer Seitenwand 5 Haltestege 8 aus, die den Querschnitt der Aufnahmenut 2 verringern.

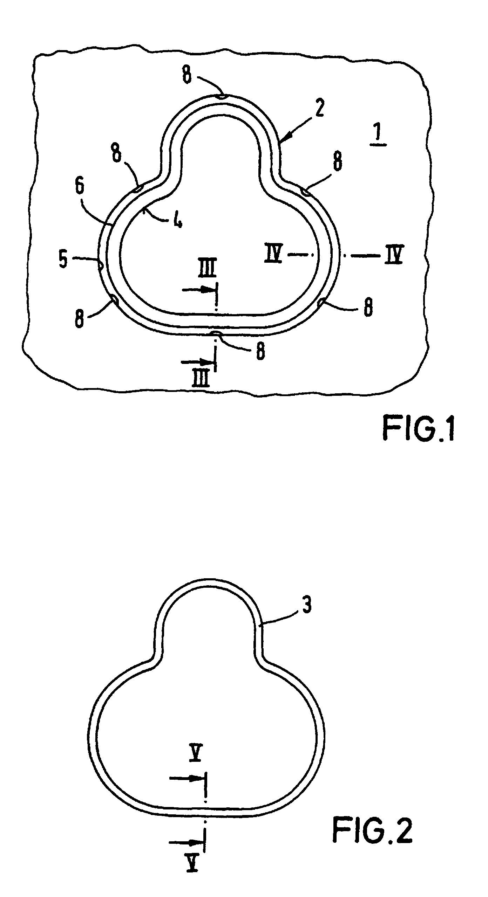

Wie aus Fig. 2 und Fig. 5 ersichtlich kann nunmehr die endlose Ringdichtung 3 mit einem gleichförmigen, rechteckigen Querschnitt hergestellt werden. Um das Einlegen der endlosen Ringdichtung 3 in die kompliziert geformte Aufnahmenut zu erleichtern, wird die endlose Ringdichtung 3 aus einem in der Form der Aufnahmenut extrudierten Schlauch abgeschnitten, wobei der extrudierte Formschlauch auf einem entsprechenden Dorn zu einer Kreisform aufgeweitet wird und auf diesem Dorn in herkömmlicher Weise entsprechend geschnitten wird. Die so geschnittene endlose Ringdichtung 3 nimmt nach Abnahme vom Dorn wieder den Verlauf der Kontour der Aufnahmenut 2 ein, in der sie extrudiert wurde.

Die in der Aufnahmenut 2 vorgesehenen Haltestege 8 sind, wie bei 9 gezeigt, etwas kürzer gehalten und abgeschrägt ausgeführt, wodurch das Einsetzen der endlosen Ringdichtung 3 erleichtert wird.

Es muß noch darauf hingewiesen werden, daß die in der endlosen Aufnahmenut 2 von einer Seitenwand 5 ausgehenden Haltestege 8 nur auf einer der Seitenwände angeordnet sind und zwar auf der Seite, an der die endlose Ringdichtung 3 in Folge der im abzudichtenden Kanal auftretenden Druckverhältnisse nicht zum Anliegen kommt.

Im vorliegenden Fall eines Ansaugkrümmers, wo im Ansaugkanal 4 Unterdruck herrscht, wird sich die endlose Ringdichtung 3 unter den Druckverhältnissen an der zum Ansaugkanal 4 liegenden Seitenwand 6 anlegen und dort abdichten, wobei dann die über die Tiefe der Aufnahmenut vorstehende Stirnkante 10 an dem anderen Bauteil (nicht gezeigt) abdichtend zur Anlage kommt.

Die Breite B der Aufnahmenut 2 ist hierbei größer als die Breite x der Ringdichtung 3, aber der Abstand y von den Haltestegen 8 ist geringer als die Breite x der Ringdichtung 3.

## Patentansprüche

1. Dichtungsanordnung zwischen ruhend aufeinanderliegenden Bauteilen, mit einer in einer endlosen Aufnahmenut (2) im einen Bauteil (1) lose aufgenommenen, streifenförmigen, endlosen Ringdichtung (3) mit einem gleichförmigen Querschnitt,
**dadurch gekennzeichnet, daß**
- die im einen Bauteil (1) angeordnete endlose Aufnahmenut (2) einen rechteckigen Querschnitt von grösserer Breite (B) als die Dicke (X) der Ringdichtung (3) aufweist und
- in bestimmten Abständen mit von einer Seitenwand (5) vorspringenden Haltestegen (8) für die Ringdichtung (3) versehen ist, die den Querschnitt der Aufnahmenut auf eine Breite (Y) verringern, die geringer ist als die Breite (X) der Ringdichtung (3).

2. Dichtungsanordnung nach Anspruch 1,
**dadurch gekennzeichnet, daß**
- die von einer Seitenwand (5) vorspringenden Haltestege (8) an ihren oberen Enden bei (9) zurückgenommen und abgeschrägt ausgeführt sind.

3. Dichtungsanordnung nach den Ansprüchen 1 und 2,
**dadurch gekennzeichnet, daß**
- die von der Seitenwand (5) vorspringenden Haltestege (8) entsprechend den in dem abzudichtenden Kanal herrschenden Druckverhältnisse (Unterdruck oder Über-druck) an den Seitenwänden angeordnet sind, an denen die endlose Ringdichtung (3) unter den Druckverhältnissen nicht zur Anlage kommt.

4. Dichtungsanordnung nach den Ansprüchen 1 bis 3
**dadurch gekennzeichnet, daß**
- die endlose Ringdichtung (3) mit gleichförmigen, rechteckigem Querschnitt durch Schneiden vom einem Schlauch hergestellt wird, dessen extrudierte Außenkontour mit der Kontour der komplizierten Aufnahmenut (2) übereinstimmt und wobei das Schneiden der endlosen Ringdichtung (3) in auf einem Dorn zu einer Kreisform aufgeweitetem Zustand erfolgt.

## Claims

1. Seal arrangement between components lying stationarily on one another, with a strip-shaped continuous ring seal (3) of uniform cross section received loosely in a continuous receiving groove (2) in one component (1), **characterized in that** the continuous receiving groove (2) arranged in one component (1) has a rectangular cross section of a width (B) greater than the thickness (X) of the ring seal (3) and is, at given spacings, provided with holding webs (8) for the ring seal (3), which project from a side wall (5) and reduce the cross section of the receiving groove to a width (Y) which is smaller than the width (X) of the ring seal (3).

2. Seal arrangement according to Claim 1, **characterized in that** the holding webs (8) projecting from a side wall (5) are set back and chamfered at their upper ends at (9).

3. Seal arrangement according to Claims 1 and 2, **characterized in that** the holding webs (8) projecting from the side wall (5) are, according to the pressure conditions (negative pressure or positive pressure) prevailing in the duct to be sealed, arranged on the side walls against which the continuous ring seal (3) does not come to bear under the pressure conditions.

4. Seal arrangement according to Claims 1 to 3, **characterized in that** the continuous ring seal (3) of uniform rectangular cross section is produced by cutting from a tube, the extruded outer contour of which corresponds to the contour of the complex receiving groove (2), and the cutting of the continuous ring seal (3) taking place in a state in which the tube is expanded into a circular shape on a mandrel.

## Revendications

1. Agencement d'étanchéité entre des éléments de construction superposés stationnaires, comprenant un joint d'étanchéité annulaire sans fin (3) en forme de bande, reçu lâchement dans une rainure de logement (2) sans fin dans un élément de construction (1), de section transversale uniforme,
**caractérisé en ce que**
- la rainure de logement (2) sans fin disposée dans un élément de construction (1) présente une section transversale rectangulaire de largeur (B) supérieure à l'épaisseur (X) du joint d'étanchéité annulaire (3) et
- est pourvue, à intervalles définis, de nervures de maintien (8) pour le joint d'étanchéité annulaire (3), saillant depuis une paroi latérale (5), qui réduisent la section transversale de la rainure de logement à une largeur (Y) qui est inférieure à la largeur (X) du joint d'étanchéité annulaire (3).

2. Agencement d'étanchéité selon la revendication 1,
**caractérisé en ce que**
- les nervures de maintien (8) saillant depuis une paroi latérale (5) sont pourvues d'un retrait en (9) au niveau de leurs extrémités supérieures et sont réalisées de manière biseautée.

3. Agencement d'étanchéité selon les revendications 1 et 2, **caractérisé en ce que**
- les nervures de maintien (8) saillant depuis la paroi latérale (5) sont disposées, en fonction des rapports de pression (dépression ou surpression) existants dans le conduit à étanchéifier, sur les parois latérales au niveau desquelles le joint d'étanchéité annulaire sans fin (3) ne vient pas en appui dans les conditions de pression.

4. Agencement d'étanchéité selon les revendications 1 à 3,
**caractérisé en ce que**
- le joint d'étanchéité annulaire sans fin (3) est fabriqué avec une section transversale rectangulaire uniforme par découpage d'un tuyau souple, dont le contour extérieur extrudé correspond au contour de la rainure de logement compliquée (2) et où le découpage du joint d'étanchéité annulaire sans fin (3) s'effectue dans un état élargi à une forme circulaire sur un mandrin.
